# EUROPEAN PATENT SPECIFICATION

(11) **EP 4 474 694 B1**
(45) Date of publication and mention of the grant of the patent: **18.11.2026**
(21) Application number: 23177936.4
(22) Date of filing: 07.06.2023
(51) Int. Cl.: F21V 8/00, B60Q 3/208

(54) **A TRANSPARENT ROOF PANEL ASSEMBLY FOR A VEHICLE ROOF, AND METHOD OF MAKING IT**
TRANSPARENTE DACHPLATTENANORDNUNG FÜR EIN FAHRZEUGDACH UND VERFAHREN ZU IHRER HERSTELLUNG
ENSEMBLE PANNEAU DE TOIT TRANSPARENT POUR TOIT DE VÉHICULE ET SON PROCÉDÉ DE FABRICATION

(43) Date of publication of application: 11.12.2024
(73) Proprietor: Inalfa Roof Systems Group B.V., 5807 GW Oostrum (NL)
(72) Inventor: NELLEN, Marcel Johan Christiaan, 5815 AR Merselo (NL); VAN DOLEWEERD, Theodorus, 6024 AK Budel-Dorplein (NL); DE BIE, Sander, 6361 XB Nuth (NL)
(74) Representative: De Vries & Metman

(56) References cited:
- EP-A2- 1 791 010
- WO-A1-2021/198262
- WO-A1-2023/156939
- US-A- 5 876 107
- US-A1- 2013 213 929

## Description

The invention relates to a transparent roof panel assembly for a vehicle roof, the roof panel assembly comprising:
- a panel having a transparent area, the panel being configured to be arranged over an opening in the vehicle roof to allow visible light to pass through the transparent area between an exterior of the vehicle and an interior of the vehicle,
- at least one light source arranged to provide light in the panel, and
- an in-coupling element to in-couple light into the panel from the interior side of the panel, the in-coupling element being attached to the interior side of the panel and redirecting light from the at least one light source into the panel.
- wherein the in-coupling element is made at least partly from optical adhesive which is directly moulded to the interior side of the panel.

Such transparent roof panel assembly is known, for example from WO 2021/198262 A1**.** In this document, it is only mentioned that the in-coupling element could be made from cast resin which is formed directly on the lower side of the panel.

It is one of the objects of the present invention to provide such transparent roof panel assembly.

According to the invention, the in-coupling element is bounded at least on its light entering side by a mould for the optical adhesive during moulding of the in-coupling element.

By using a mould at least on the light entering side of the in-coupling element, the light entering side can be formed in a desired and precise shape. The mould can be easily adapted to the contour of the interior side of the panel, especially if the mould is deformable.

The mould is permanent and forms at least the light entering side of the in-coupling element.

In this manner, the mould becomes one with the optical adhesive and determines the shape of the light entering side of the in-coupling element. Especially if the at least one light source is positioned outside the in-coupling element, the transparency of the mould should be high.

This can for example be realized if the mould is in the form of a clear transparent plastic strip and may be one piece of material or coupled segments. PMMA or another transparent plastic having good light conducting properties could be used for the mould.

As the optical adhesive is normally expensive, the quantity used should be minimized and for this it is advantageous that the in-coupling element is wedge-shaped with a high side and a low side. In that case, the mould will be present at least on the high side of the in-coupling element, which is the light-entering side of the in-coupling element.

The clear plastic strip forming the mould may be provided with deformable sections along the length of the strip to compensate for thermal expansions during use of the roof panel assembly.

Although it is possible to use a rig to position the mould with respect to the panel during moulding, it is preferred to attach the mould to the interior side of the panel with the help of an adhesive tape, if the mould is permanent.

The adhesive tape may be positioned on an extension of the mould away from the in-coupling element, the extension being used for attaching the at least one light source thereon.

The light source could be mounted on a strip, for example a LED light on a PCB strip, and the adhesive tape could then be attached to the strip and to the interior side of the panel, whereas the strip holds the mould, for example by being clipped to the mould.

In a particular embodiment, the mould extends all around the in-coupling element.

Such mould could be used especially if the cross-section of the in-coupling element is not wedge-shaped but rectangular or another shape requiring a boundary on all sides during moulding.

The in-coupling element is preferably bounded on its sides substantially perpendicularly to its light entering side by a barrier, such as a piece of tape or by the mould, and wherein preferably the mould is provided with hooks extending into the in-coupling element.

Such barrier may sharply define the ends of the in-coupling end, especially if the optical adhesive is relatively fluid. The hooks will provide additional points of attachment between the optical adhesive and the mould.

If desired, the mould may comprise at least one lens and the at least one light source is then positioned such that light from the light source enters the in-coupling element through the lens.

In this way, the built-in lens could be used to direct the light from the light source in the desired direction.

In another embodiment, the mould is provided with a light guiding element to guide light from a position at a distance from the interior side of the panel to a position closer to the interior side of the panel where the light enters the in-coupling element.

In this way it is possible to use light sources that cannot be positioned close to the interior side of the panel, for example top emitting LEDs positioned with their PCB strip substantially perpendicular to the interior side of the panel.

In a particular embodiment, the mould covers the in-coupling element completely and the in-coupling element is formed by injection moulding of the optical adhesive.

In this way, the shape of the in-coupling element is completely determined by the mould which covers the optical adhesive completely, except for one or more openings, such an injection opening for the fluid optical adhesive and a venting opening for the air escaping during injection moulding.

The invention further relates to a method of attaching a transparent light transmitting element, such as an in-coupling element, to a glass ply of a transparent roof panel assembly, comprising the steps of:
providing a mould,
holding the mould with respect to the glass ply,
positioning the glass panel assembly such that the surface of the in-coupling element to be formed, which is turned away from glass ply, is horizontal,
moulding fluid optical adhesive onto the glass ply next to the mould such that it takes the shape of the in-coupling element to be formed and adheres to the glass ply, and also to the mould which is an optically clear permanent mould,
allowing or forcing the adhesive to cure.

Further details and advantages of the invention will become clear from the following description with reference to the drawings showing embodiments of the roof panel assembly according to the invention.
Fig. 1 is a very schematic perspective view of a vehicle roof comprising the roof panel assembly according to the invention.
Fig. 2 is a plan view of the transparent roof panel assembly of Fig. 1.
Fig. 3a is a perspective view of a side portion of a panel of the roof panel assembly of Fig. 2 upside down showing an in-coupling element.
Fig. 3b is a view corresponding to that of Fig. 3a but with LEDs added to the in-coupling element.
Fig. 3c is an enlarged plan view showing detail III-c in Fig. 3b.
Fig. 4a is a view corresponding to that of Fig. 3a but showing another embodiment.
Fig. 4b is a view corresponding to that of Fig. 3b but showing the other embodiment.
Fig. 4c is a view corresponding to that of Fig. 3c but showing the other embodiment.
Fig. 5a is an enlarged cross-sectional view along the line V-V in Fig. 3b showing the panel in an upside-down position.
Figs. 5b - 5d are views corresponding to that of Fig. 5a but showing further embodiments.
Figs. 6a and 6b are views corresponding to those of Figs. 3a and 3b but showing still another embodiment.
Fig. 7 is an enlarged perspective view of the mould used in the embodiment of Figs. 6a and 6b.
Fig. 8a is an enlarged cross-sectional view along the line VIII-VIII in Fig. 6b.
Fig. 8b is a view corresponding to that of Fig. 8a but showing still another embodiment.
Figs. 9a, 9b are a perspective view and a plan view, respectively, of an in-coupling element and mould according to yet another embodiment.
Fig. 10 is a view corresponding to that of Fig. 4 but showing yet another embodiment.
Fig. 11 is a plan view of a portion of a panel showing a part of an in-coupling element and light sources.
Fig. 12 is an enlarged sectional view along the line XII-XII in Fig. 11.
Figs. 13a and 13b are views corresponding to those of Figs. 3a and 3b showing still a further embodiment.
Fig. 14 is an enlarged cross-sectional view along the line XIV-XIV in Fig. 13b.
Figs. 15a - 15c are views corresponding to that of Fig. 14 showing still other embodiments.

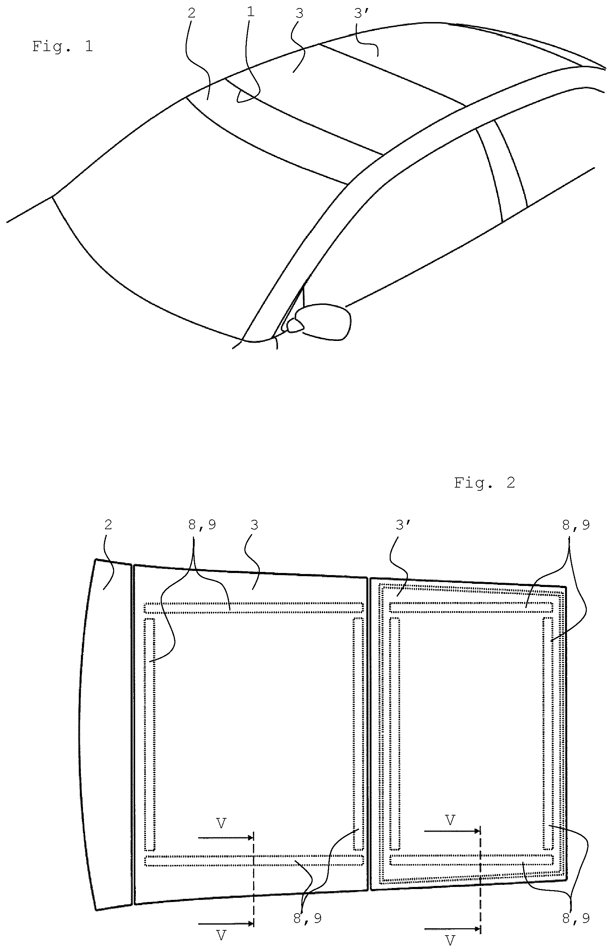

Fig. 1 shows a part of a vehicle, in this case a passenger car, comprising a glass roof construction. The vehicle comprises a roof opening 1 in a fixed roof 2. In this case the open roof construction has a roof panel assembly including two panels 3, 3' placed adjacent to each other in a longitudinal direction of the vehicle. The frontal of the two panels 3, 3' is an openable panel 3 capable of closing and at least partly opening the roof opening 1 of the fixed roof 2. The second panel 3' placed rearward of the front panel 3 may be a stationary panel closing the remaining part of the roof opening 1, however it is conceivable that also the second panel 3' is a movable panel. Alternatively, it is also conceivable to have just one panel, either fixed or capable of closing and at least partly opening the roof opening 1.

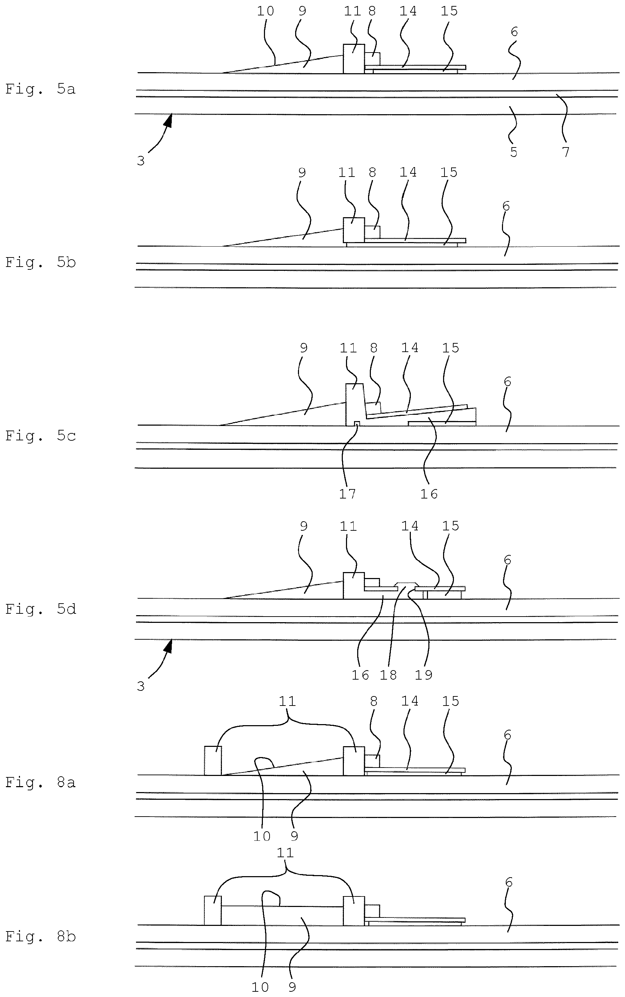

Figs. 2 and 5 show the transparent roof panel assembly and a partial cross-section of a multi-layered panel 3 of the glass roof panel assembly in an upside-down condition. An exterior glass ply 5 (in use the upper ply) and an interior glass ply 6 are attached by an interlayer 7 and optionally a second interlayer (not shown). For example, the interlayer 7 may be formed of EVA or PVB. Other materials to form a flexible foil are known and suitable as well as long as the refractive index of the interlayer 7 is lower than that of the interior glass ply 6 if one wishes to keep any light within the glass ply. For example, glass has a reflective index of 1.52, EVA and PVB of 1.48.

At a lower side of the interior or first glass ply 6, a light source 8 or series of light-sources 8 is/are provided. In Fig. 2 it is shown that the two panels 3, 3' are provided with light sources 8 along their whole circumferences. The light source 8 may be any light source suitable for coupling light into the interior glass ply 6. For example, known light sources are LEDs directing light directly into lower side of the interior glass ply 6 or, alternatively or additionally, an elongated, side-emitting light guide arranged next to the lower side of the interior glass ply 6.

An out-coupling pattern is provided at a surface of the interior glass ply 6. In particular, the out-coupling pattern is arranged at an interface between the interior glass ply 6 and the interlayer 7. The interior glass ply 6 and the interlayer 7 are adjacent to each other, which means they are attached directly to each other or through the outcoupling pattern. Rays of light propagate through the interior glass ply 6 by internal reflection and may impinge on a scattering particle of the out-coupling pattern. Upon impingement, the ray of light is at least partly reflected and reflected light rays are enabled to leave the interior glass ply 6 at an opposite surface of the interior glass ply 6 and is thus emitted into an interior passenger compartment of the vehicle. See for example co-pending US application 18/326,346 the whole content of which is incorporated herein by reference thereto.

Other possibilities for the out-coupling pattern exist. For example, the light may be in-coupled into the interlayer 7 which includes the out-coupling pattern. The outcoupling pattern may be provided on one of the surfaces of the interlayer 7, on the interior glass ply 6 or randomly scattered within the interlayer 7.

The light source 8 (in this case a plurality of LED lights) is coupled to a polyhedron-, e.g., prism- or wedge-shaped, in-coupling element 9 provided in front of the light source 8 to in-couple light into the panel from the interior side thereof. The in-coupling element 9 is mainly made from an optical clear glue, such as e.g., Optimax ^{©}, Norland IML 150 or the like. To cure the glue, climate or UV-light may be used, or a two-component glue can be used to activate it. It is preferred to use a glue (or other intermediate means of attachment) that has a refractive index that is close to and preferably higher than that of glass, i.e., 1.52 for an optimal light transmission to the interior glass ply 6. Due to the glue, the surface of the in-coupling element 9 will adapt exactly to the interior surface of the interior glass ply 6, as the glue will be provided and supplied to the glass surface in a fluid state.

Fig. 5a shows that in this embodiment, the in-coupling element is wedge-shaped. A surface 10 of the wedge-shaped in-coupling element 9 that is facing away from the interior glass ply is inclined to the interior surface of the panel 3. In order to make such in-coupling element 9 from a fluid adhesive, a mould 11 is used at the high side of the wedge-shaped in-coupling element which is the light entering side thereof. In order to mould the in-coupling element 9, the panel 3 is held at an inclination such that the surface 10 of the in-coupling element 9 is horizontal. If then adhesive is supplied to the surface of the interior glass ply 6, it will spread and level out between the mould 11 and the inclined interior surface of the panel 3. If the adhesive is cured immediately after it has levelled locally, it is also possible to form an even in-coupling element along the length of the in-coupling element even if the panel is curved along this length. The supply opening of the adhesive could be held stationary and the panel 3 is then moved in a 3-D movement along the supply opening. For every in-coupling element around the circumference of the panel 3, 3', the panel 3, 3' must be held at a different orientation/inclination and be moved in different directions.

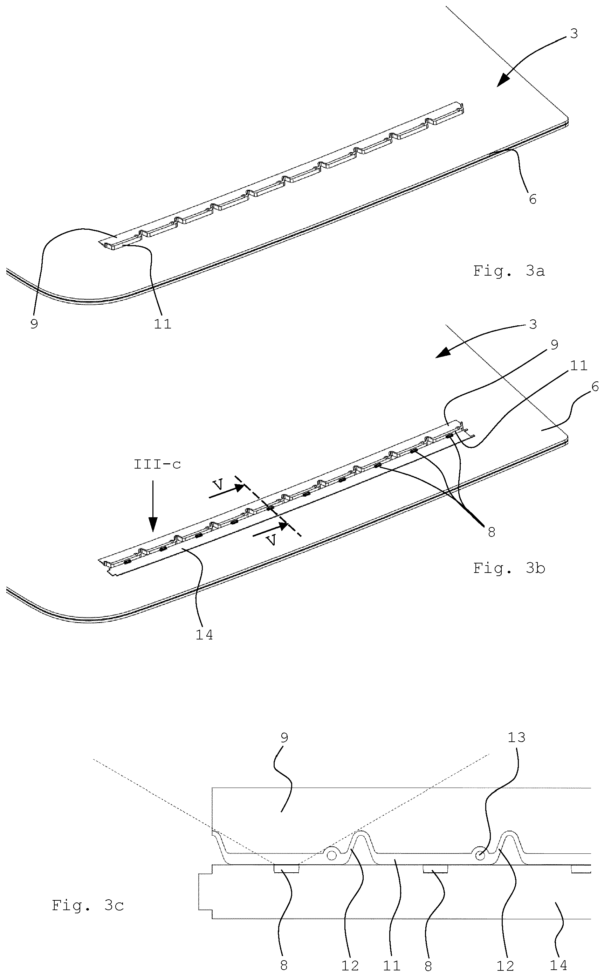

Figs. 3a - 3c and 5a show a first embodiment of the panel assembly. In this embodiment, the mould 11 is formed by a permanent strip of optically clear plastic, such as PMMA (polymethylmethacrylate). Fig. 3c shows that the strip has bends 12 which allow a deformation to compensate for thermal expansion during use of the roof panel assembly. Fig. 3c also shows holes 13 which can be used to position the mould 11 with respect to a rig during manufacture, which rig is then used to position the mould 11 with respect to the panel 3.

Between each two bends 12 there is provided a LED 8, which LEDs are positioned on a PCB strip 14. As is shown in Fig. 5a, the PCB strip 14 is attached to the glass ply 6 of the panel 3 by means of a two-sided adhesive tape 15 adhering to the glass ply 6 and to the PCB strip 14.

In the embodiment of Fig. 5b, the tape 15 is extended to a position below the mould 11, so that both the mould 11 and the PCB strip 14 are attached to the glass ply 6 by means of the adhesive tape 15.

In the embodiment of Fig. 5c, the mould 11 is provided with an extension 16 away from the in-coupling element 9. This extension is used to attach the mould 11 to the glass ply 6 of the panel 3 by means of the adhesive tape 15. The PCB strip 14 is attached to the surface of the extension facing away from the panel 3. This surface is inclined to direct the light from the LED or other light source 8 towards the interior glass ply 6. Fig. 5c also shows a capillary stop groove 17 in the surface of the mould 11 facing the interior glass ply 6. Any optical adhesive that is flowing between the mould 11 and the surface of the interior glass ply 6 due to capillary forces is stopped at the groove 17 that is so high that no capillary forces are created there. When the mould 11 is made of PMMA material, this has the advantage that it transfers UV light so that if UV light is used to cure the optical adhesive and there is adhesive below the mould 11 it will still be cured by the UV light.

Fig. 5d shows another embodiment where the PCB strip 14 is again attached to the interior ply 6 of the panel 3 by means of adhesive tape 15. The thickness of this tape 15 equals that of the extension 16 of the mould 11, which extension 16 extends up to the tape 15. The PCB strip 14 is partly fixed to the panel 3 by means of the adhesive tape 15 and partly extending across the extension 16 of the mould 11 and is attached thereto, for example by mushroom-shaped knobs 18 extending through holes 19 in the PCB strip 14. In this way the mould 11 is attached to the panel 3 by means of the tape 15 indirectly through the PCB strip 14.

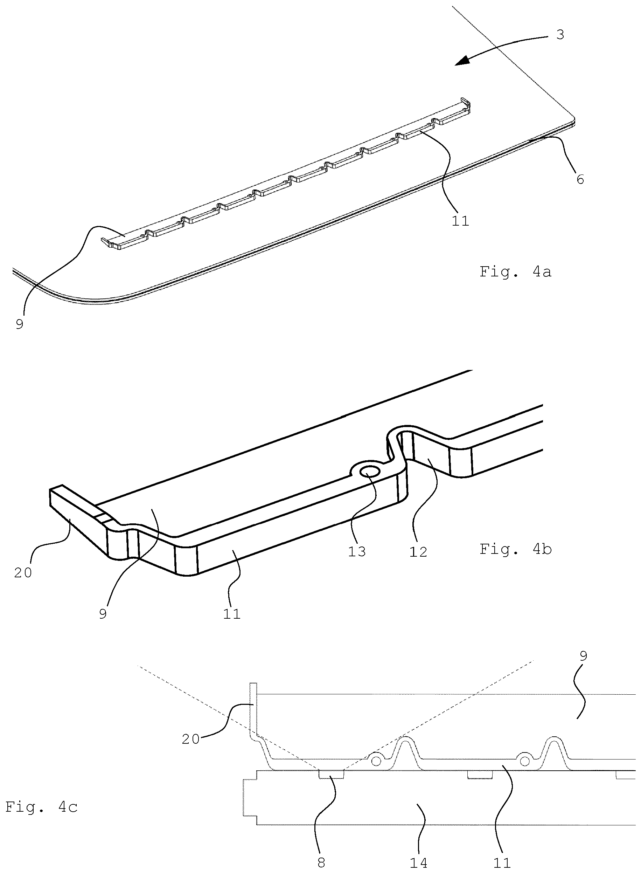

Figs. 4a - 4c shows a variation of the embodiment of Fig. 3. In this new embodiment, the mould has extensions 20 at the extreme ends to provide a barrier for the adhesive at the start and end of the in-coupling element 9. The low side of the in-coupling element could also be bordered by a tape which is attached to the panel, either permanently or removable after curing of the optical adhesive. Fig. 4c shows a LED light source 8 and the maximum angle of the light bundle.

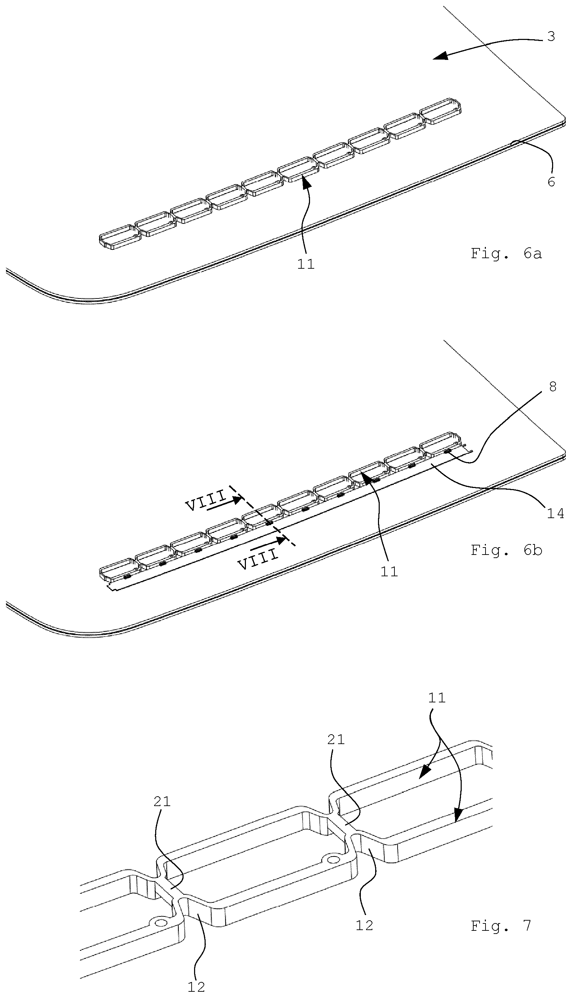

Figs. 6a - 8b show a variation in which the in-coupling element 9 may either have a wedge-shaped cross-section (Fig. 8a) or a rectangular cross-section (Fig. 8b). In this embodiment, the mould 11 extends completely around the adhesive and consisting more of less of two strip-shaped moulds 11 from the former embodiments bonded to each other in mirror shape. The two strips are interconnected by bridges 21 which may either extend the full height or leave a gap on their lower sides so that the optical adhesive may flow below the bridges 21 to form one adhesive part. The advantage of the Fig. 8a embodiment over that of Fig. 8b is that only half the volume of optical adhesive is required. Optical adhesive is generally very expensive so that minimizing the required amount of adhesive is advantageous.

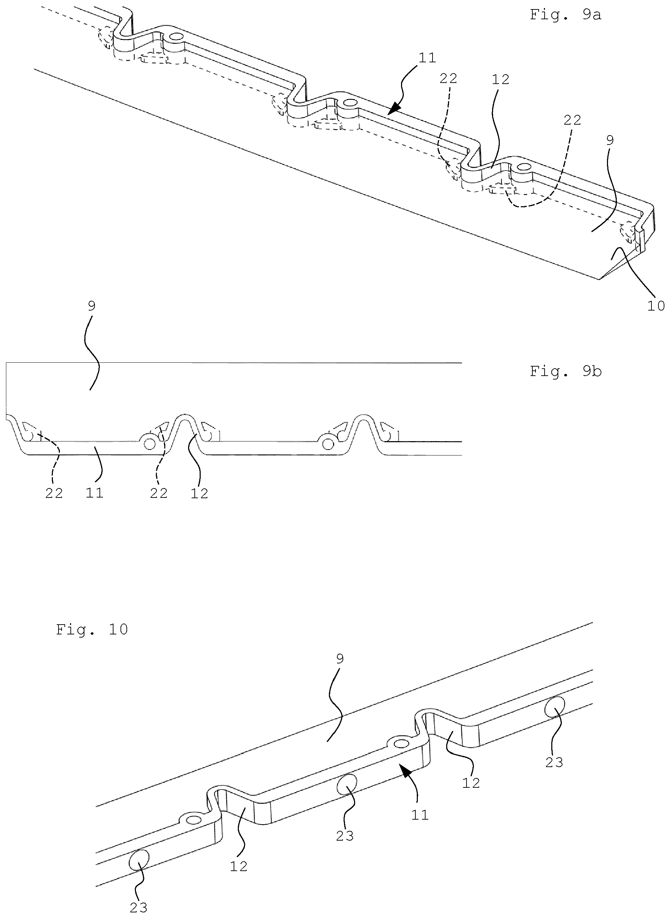

The embodiment of Figs. 9a, 9b, the mould 11 is provided with hooks 22 to improve the attachment of the optical adhesive to the mould 11. In this case, the hooks 22 are positioned on either side of the deformable bends 12 where they do not interfere with the light bundle from the LED light source 8. Other positions and shapes of the hooks 22 are conceivable, however.

Fig. 10 shows an embodiment of the mould 11 which is formed with lenses 23, one for each light source 8. The lenses 23 may be formed in one piece with the mould 11 and be created during manufacture of the mould 11, for example during injection moulding. The lenses 23 may be either 2D or even 3D to "bundle" the light already in the correct direction (towards the glass at a desired angle) to improve efficiency. An additional reflection lens (not shown) may be provided to reflect light arrays that would otherwise be lost into the correct direction (e.g., parallel to the inclined surface 10 of the in-coupling element 9). Such lens may also be mounted onto the light source 8, such as the LED.

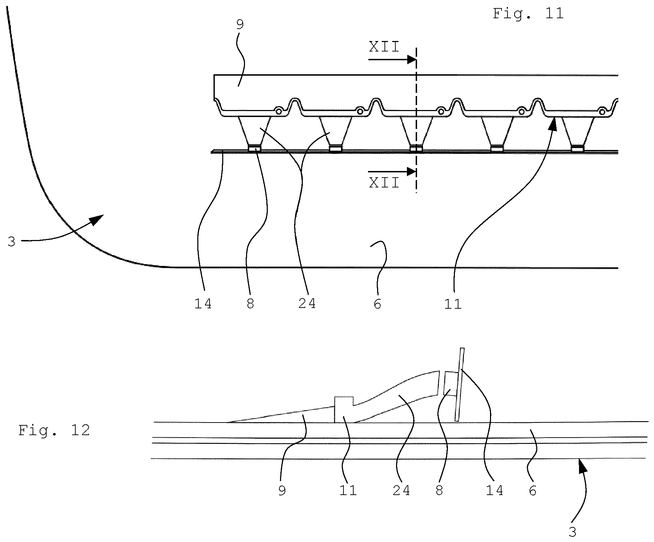

Fig. 11 and 12 show an embodiment in which the mould 11 is provided with a light guide 24 to guide light from a position spaced from the surface of the interior ply 6 of the panel 3 to a position closer thereto. This is particularly useful in case one wishes to use a top emitting LED in which the LED light source 8 emits light perpendicularly to the PCB strip 14. In Fig. 12, the PCB strip 14 is positioned substantially perpendicular to the surface of the ply 6 of the panel 3. However, it would even be possible that the LED light source is emitting light away from the panel 3. A reflection surface will then be needed to reflect the light in the direction of the (light guide 24 of the) in-coupling element 9.

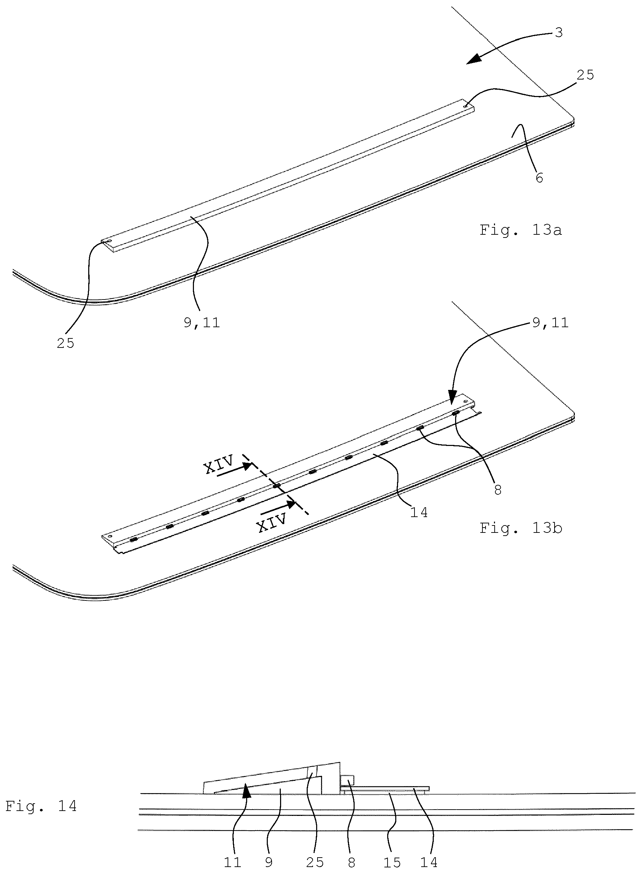

Figs. 13a, 13b and 14 show an embodiment in which the mould 11 together with the surface of the ply 6 of the panel 3 completely encloses the optical adhesive in order to be able to supply the optical adhesive to the interior surface of the panel 3 by injection moulding. For this purpose, the mould 11 has one or more injection holes 25 (in this case 2 at the opposite ends of the mould 11) through which the fluid adhesive is injected into the enclosed space. It is also possible that one of the holes 25 is used to inject fluid adhesive into the space, while the other hole 25 is used for allowing air within the space to escape in case the injection does not take place under vacuum. Other arrangements are possible of course.

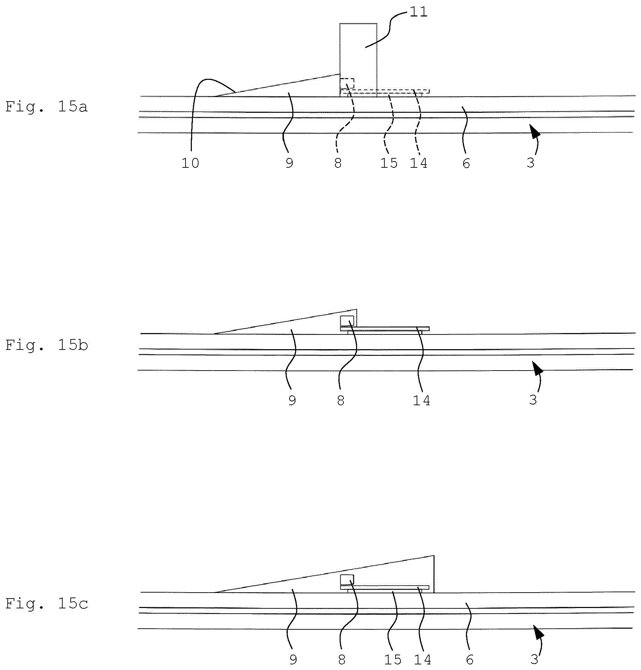

Fig. 15a show a variant not according to the invention in which the mould 11 is not permanent but only used during manufacture. For this purpose, the mould 11 is made from non-sticking material, such as silicone, and mounted on a rig or the like so that the mould can be removed from the panel 3 when the adhesive for the in-coupling element 9 has sufficiently cured. After moulding of the in-coupling element 9, the light source 8 with the PCB strip 14 can be attached to the panel 3, for example by means of the adhesive tape 15.

In the Fig. 15b embodiment, the PCB strip 14 with the light source 8 is attached to the panel 3 before the mould is positioned and the in-coupling element 9 is formed by moulding the optical adhesive. In this case, the mould 11 (Fig. 15a) is placed onto the PCB strip 14 at a position next to the LED light source 8 so that the light source 8 is inside the in-coupling element 9.

The embodiment of Fig. 15c is the extreme embodiment in which the complete light source 8 and PCB strip 14 have been incorporated into the in-coupling element 9. The mould 11 has been placed next to the PCB strip 14 such that the adhesive is poured onto the light source 8 and PCB strip 14. This embodiment requires more optical adhesive and is therefore not preferred as long as the adhesive is expensive.

It is clear from the above description that the invention provides a roof panel assembly in which the panel is lighted by light sources and in-coupling elements that have favourable characteristics, such as versatility, easy and precise attachment, efficient light transmission, easy assembly and others.

Detailed embodiments of the present invention are disclosed herein, however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims or in separate embodiments may be applied in combination and any advantageous combination of such claims and embodiments are herewith disclosed.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. All such modifications as would be apparent to one skilled in the art are intended to be included within the scope of the following claims.

For example, it is possible to replace one or more glass plies in the roof panel assembly by a plastic sheet, for example a polycarbonate sheet. The invention is also useful in panels having only a single ply. Further, the in-coupling element may be partly covered towards the interior of the vehicle by a cover. This cover may also cover the light source with its base. The embodiments shown in the drawing include moulds made of one piece of material. If the mould extends a longer length, it will have flexible portions between sections of the mould. However, it is also conceivable that the mould comprises several sections coupled to each other by couplings. These couplings may be flexible or allow movement.

## Claims

1. A transparent roof panel assembly for a vehicle roof, the roof panel assembly comprising:
• a panel (3) having a transparent area, the panel being configured to be arranged over an opening (1) in the vehicle roof (2) to allow visible light to pass through the transparent area between an exterior of the vehicle and an interior of the vehicle,
• at least one light source (8) arranged to provide light in the panel, and
• an in-coupling element (9) to in-couple light into the panel from the interior side of the panel, the in-coupling element being attached to the interior side of the panel and redirecting light from the at least one light source (8) into the panel,
• wherein the in-coupling element (9) is made at least partly from optical adhesive which is directly moulded to the interior side of the panel, the in-coupling element being bounded at least on its light entering side by a mould (11) for the optical adhesive at least during moulding of the in-coupling element, wherein the mould (11) is permanent and forms at least the light entering side of the in-coupling element (9).

2. The transparent roof panel assembly of claim 1, wherein the in-coupling element (9) is wedge-shaped with a high side and a low side, wherein the mould (11) is present at least on the high side of the in-coupling element, which is the light-entering side of the in-coupling element.

3. The transparent roof panel assembly of claim 1 or 2, wherein the mould (11) is in the form of a clear transparent plastic strip and may be one piece of material or coupled segments.

4. The transparent roof panel assembly of claim 3, wherein the clear plastic strip forming the mould (11) is provided with deformable sections (12) along the length of the strip to compensate for thermal expansions during use of the roof panel assembly.

5. The transparent roof panel assembly of any of the preceding claims, wherein the mould (11) is attached to the interior side of the panel (3) with the help of an adhesive tape (15).

6. The transparent roof panel assembly according to claim 5, wherein the adhesive tape (15) is positioned on an extension (16) of the mould (11) away from the in-coupling element (9), the extension being used for attaching the at least one light source (8) thereon.

7. The transparent roof panel assembly of claim 5, wherein the at least one light source (8) is mounted on a strip (14), such as LED lights on a PCB strip, and the adhesive tape (15) is attached to the strip and to the interior side of the panel (3), whereas the strip (14) holds the mould (11), for example by being clipped to the mould.

8. The transparent roof panel assembly of claim 1 or 2, wherein the mould (11) extends all around the in-coupling element (9).

9. The transparent roof panel assembly of any of claims 1 - 7, wherein the in-coupling element (9) is bounded on its sides substantially perpendicularly to its light entering side by a barrier (20), such as a piece of tape or by the mould, and/or wherein the mould is provided with hooks (22) extending into the in-coupling element.

10. The transparent roof panel assembly of any of the preceding claims, wherein the mould (11) comprises a lens (23) and the light source (8) is positioned such that light from the light source enters the in-coupling element (9) through the lens.

11. The transparent roof panel assembly of any of the preceding claims, wherein the mould (11) is provided with a light guiding element (24) to guide light from a position at a distance from the interior side of the panel (3) to a position closer to the interior side of the panel where the light enters the in-coupling element (9).

12. The transparent roof panel assembly of claim 1, wherein the mould (11) covers the in-coupling element (9) completely and the in-coupling element is formed by injection moulding of the optical adhesive.

13. A method of attaching a transparent light transmitting element, such as an in-coupling element (9), to a glass ply (6) of a transparent roof panel, comprising the steps of:
providing a mould (11),
holding the mould with respect to the glass ply,
positioning the panel (3) such that the surface (10) of the in-coupling element (9) to be formed, which is turned away from the glass ply, is horizontal,
moulding fluid optical adhesive onto the glass ply (6) next to the mould (11) such that it takes the shape of the in-coupling element to be formed and adheres to the glass ply (6), and to the mould which is an optically clear permanent mould,
allowing or forcing the optical adhesive to cure.

## Patentansprüche

1. Transparente Dachplattenbaugruppe für ein Fahrzeugdach, wobei die Dachplattenbaugruppe aufweist:
• eine Platte (3) mit einem transparenten Bereich, wobei die Platte konfiguriert ist, um über einer Öffnung (1) in dem Fahrzeugdach (2) angeordnet zu sein, um sichtbares Licht durch den transparenten Bereich zwischen einer Außenseite des Fahrzeugs und einer Innenseite des Fahrzeugs passieren zu lassen,
• zumindest eine Lichtquelle (8), die angeordnet ist, um Licht in der Platte bereitzustellen, und
• ein Einkoppelelement (9) zum Einkoppeln von Licht in die Platte von der Innenseite der Platte aus, wobei das Einkoppelelement an der Innenseite der Platte angebracht ist und Licht von der zumindest einen Lichtquelle (8) in die Platte umlenkt,
• wobei das Einkoppelelement (9) zumindest teilweise aus optischem Klebstoff hergestellt ist, der direkt an die Innenseite der Platte angeformt ist, wobei das Einkoppelelement zumindest an seiner Lichteintrittsseite durch eine Form (11) für den optischen Klebstoff zumindest während des Formens des Einkoppelelements begrenzt ist, wobei die Form (11) permanent ist und zumindest die Lichteintrittsseite des Einkoppelelements (9) bildet.

2. Transparente Dachplattenbaugruppe nach Anspruch 1, wobei das Einkoppelelement (9) keilförmig mit einer hohen Seite und einer niedrigen Seite ist, wobei die Form (11) zumindest an der hohen Seite des Einkoppelelements vorhanden ist, die die Lichteintrittsseite des Einkoppelelements ist.

3. Transparente Dachplattenbaugruppe nach Anspruch 1 oder 2, wobei die Form (11) die Gestalt eines klaren transparenten Kunststoffstreifens hat und ein Stück Material oder gekoppelte Segmente sein kann.

4. Transparente Dachplattenbaugruppe nach Anspruch 3, wobei der klare Kunststoffstreifen, der die Form (11) bildet, mit verformbaren Abschnitten (12) entlang der Länge des Streifens breitgestellt ist, um Wärmeausdehnungen während der Verwendung der Dachplattenbaugruppe auszugleichen.

5. Transparente Dachplattenbaugruppe nach irgendeinem der vorhergehenden Ansprüche, wobei die Form (11) an der Innenseite der Platte (3) mit Hilfe eines Klebebandes (15) angebracht ist.

6. Transparente Dachplattenbaugruppe nach Anspruch 5, wobei das Klebeband (15) an einer Verlängerung (16) der Form (11) entfernt von dem Einkoppelelement (9) positioniert ist, wobei die Verlängerung zum daran Anbringen der zumindest einen Lichtquelle (8) verwendet wird.

7. Transparente Dachplattenbaugruppe nach Anspruch 5, wobei die zumindest eine Lichtquelle (8) an einem Streifen (14) montiert ist, wie etwa LED-Leuchten an einem PCB-Streifen, und das Klebeband (15) an dem Streifen und an der Innenseite der Platte (3) angebracht ist, wobei der Streifen (14) die Form (11) hält, beispielsweise indem er an die Form geklipst ist.

8. Transparente Dachplattenbaugruppe nach Anspruch 1 oder 2, wobei sich die Form (11) um das gesamte Einkoppelelement (9) herum erstreckt.

9. Transparente Dachplattenbaugruppe nach irgendeinem der Ansprüche 1-7, wobei das Einkoppelelement (9) an seinen Seiten im Wesentlichen senkrecht zu seiner Lichteintrittsseite durch eine Barriere (20) begrenzt ist, wie z.B. ein Stück Band oder durch die Form, und/oder wobei die Form mit Haken (22) versehen ist, die sich in das Einkoppelelement erstrecken.

10. Transparente Dachplattenbaugruppe nach irgendeinem der vorhergehenden Ansprüche, wobei die Form (11) eine Linse (23) aufweist und die Lichtquelle (8) so positioniert ist, dass Licht von der Lichtquelle durch die Linse in das Einkoppelelement (9) eintritt.

11. Transparente Dachplattenbaugruppe nach irgendeinem der vorhergehenden Ansprüche, wobei die Form (11) mit einem Lichtleitelement (24) versehen ist, um Licht von einer Position in einem Abstand von der Innenseite der Platte (3) zu einer Position näher an der Innenseite der Platte zu leiten, wo das Licht in das Einkoppelelement (9) eintritt.

12. Transparente Dachplattenbaugruppe nach Anspruch 1, wobei die Form (11) das Einkoppelelement (9) vollständig bedeckt und das Einkoppelelement durch Spritzgießen des optischen Klebstoffs gebildet ist.

13. Verfahren zum Befestigen eines transparenten lichtdurchlässigen Elements, wie beispielsweise eines Einkoppelelements (9), an einer Glaslage (6) einer transparenten Dachplatte, aufweisend die Schritte:
Bereitstellen einer Form (11),
Halten der Form in Bezug auf die Glaslage, Positionieren der Platte (3), so dass die Oberfläche (10) des zu bildenden Einkoppelelements (9), die von der Glaslage abgewandt ist, horizontal ist,
Anformen von flüssigem optischem Klebstoff auf die Glaslage (6) neben der Form (11), so dass er die Gestalt des zu bildenden Einkoppelelements annimmt und an der Glaslage (6) und an der Form haftet, die eine optisch klare permanente Form ist,
Ermöglichen oder Erzwingen des Aushärtens des optischen Klebstoffs.

## Revendications

1. Ensemble panneau de toit transparent pour un toit de véhicule, l'ensemble panneau de toit comprenant :
• un panneau (3) présentant une zone transparente, le panneau étant configuré pour être agencé sur une ouverture (1) dans le toit de véhicule (2) pour permettre à de la lumière visible de passer à travers la zone transparente entre un extérieur du véhicule et un intérieur du véhicule,
• au moins une source lumineuse (8) agencée pour fournir de la lumière dans le panneau, et
• un élément de couplage d'entrée (9) pour le couplage d'entrée de la lumière dans le panneau depuis le côté intérieur du panneau, l'élément de couplage d'entrée étant fixé au côté intérieur du panneau et redirigeant la lumière de l'au moins une source lumineuse (8) dans le panneau,
• dans lequel l'élément de couplage d'entrée (9) est réalisé au moins en partie à partir d'un adhésif optique qui est moulé directement sur le côté intérieur du panneau, l'élément de couplage d'entrée étant lié au moins sur son côté d'entrée de lumière par un moule (11) pour l'adhésif optique au moins pendant le moulage de l'élément de couplage d'entrée, dans lequel le moule (11) est permanent et forme au moins le côté d'entrée de lumière de l'élément de couplage d'entrée (9).

2. Ensemble panneau de toit transparent selon la revendication 1, dans lequel l'élément de couplage d'entrée (9) est cunéiforme avec un côté haut et un côté bas, dans lequel le moule (11) est présent au moins sur le côté haut de l'élément de couplage d'entrée, qui est le côté d'entrée de lumière de l'élément de couplage d'entrée.

3. Ensemble panneau de toit transparent selon la revendication 1 ou 2, dans lequel le moule (11) est sous la forme d'une bande plastique transparente claire et peut être un morceau de matériau ou des segments couplés.

4. Ensemble panneau de toit transparent selon la revendication 3, dans lequel la bande plastique claire formant le moule (11) est pourvue de sections déformables (12) le long de la longueur de la bande pour compenser les dilatations thermiques pendant l'utilisation de l'ensemble panneau de toit.

5. Ensemble panneau de toit transparent selon l'une quelconque des revendications précédentes, dans lequel le moule (11) est fixé au côté intérieur du panneau (3) à l'aide d'un ruban adhésif (15).

6. Ensemble panneau de toit transparent selon la revendication 5, dans lequel le ruban adhésif (15) est positionné sur une extension (16) du moule (11) à l'écart de l'élément de couplage d'entrée (9), l'extension étant utilisée pour fixer l'au moins une source lumineuse (8) sur celle-ci.

7. Ensemble panneau de toit transparent selon la revendication 5, dans lequel l'au moins une source lumineuse (8) est montée sur une bande (14), telle que des lampes LED sur une bande de circuit imprimé, et le ruban adhésif (15) est fixé à la bande et au côté intérieur du panneau (3), tandis que la bande (14) maintient le moule (11), par exemple en étant clipsée au moule.

8. Ensemble panneau de toit transparent selon la revendication 1 ou 2, dans lequel le moule (11) s'étend tout autour de l'élément de couplage d'entrée (9).

9. Ensemble panneau de toit transparent selon l'une quelconque des revendications 1 à 7, dans lequel l'élément de couplage d'entrée (9) est limité sur ses côtés sensiblement perpendiculairement à son côté d'entrée de lumière par une barrière (20), telle qu'un morceau de ruban adhésif ou par le moule, et/ou dans lequel le moule est pourvu de crochets (22) s'étendant dans l'élément de couplage d'entrée.

10. Ensemble panneau de toit transparent selon l'une quelconque des revendications précédentes, dans lequel le moule (11) comprend une lentille (23) et la source lumineuse (8) est positionnée de sorte que la lumière émanant de la source lumineuse pénètre dans l'élément de couplage d'entrée (9) à travers la lentille.

11. Ensemble panneau de toit transparent selon l'une quelconque des revendications précédentes, dans lequel le moule (11) est pourvu d'un élément de guidage de lumière (24) pour guider la lumière d'une position à une distance du côté intérieur du panneau (3) vers une position plus proche du côté intérieur du panneau où la lumière pénètre dans l'élément de couplage d'entrée (9).

12. Ensemble panneau de toit transparent selon la revendication 1, dans lequel le moule (11) recouvre complètement l'élément de couplage d'entrée (9) et l'élément de couplage d'entrée est formé par moulage par injection de l'adhésif optique.

13. Procédé de fixation d'un élément de transmission de lumière transparent, tel qu'un élément de couplage d'entrée (9), à une couche de verre (6) d'un panneau de toit transparent, comprenant les étapes suivantes :
la fourniture d'un moule (11),
le maintien du moule par rapport à la couche de verre,
le positionnement du panneau (3) de sorte que la surface (10) de l'élément de couplage d'entrée (9) à former, qui est tournée à l'opposé de la couche de verre, soit horizontale,
le moulage d'un adhésif optique fluide sur la couche de verre (6) à côté du moule (11) de sorte qu'il prenne la forme de l'élément de couplage d'entrée à former et adhère à la couche de verre (6), et au moule qui est un moule permanent optiquement transparent, permettant à l'adhésif optique de durcir ou forçant l'adhésif optique à durcir.
